(19) Europäisches Patentamt
European Patent Office
Office européen des brevets

(11) **EP 2 642 099 A1**

(12) **EUROPÄISCHE PATENTANMELDUNG**

(43) Veröffentlichungstag:
25.09.2013  Patentblatt 2013/39

(51) Int Cl.:
*F02C 7/18* (2006.01)          *F02C 9/00* (2006.01)
*F02C 9/28* (2006.01)

(21) Anmeldenummer: 12161134.7

(22) Anmeldetag: **23.03.2012**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(71) Anmelder: **Alstom Technology Ltd**
**5400 Baden (CH)**

(72) Erfinder:
• **Arias Chao, Manuel**
  **8002 Zürich (CH)**
• **Nemet, Anton**
  **5426 Lengnau AG (CH)**
• **Steiger, Ulrich Robert**
  **5405 Baden-Dättwil (CH)**
• **Lilley, Darrel Shayne**
  **5453 Remetschwil (CH)**

(54) **Verfahren zur Bestimmung wenigstens einer Feuerungstemperatur für die Regelung einer Gasturbine sowie Gasturbine zur Durchführung des Verfahrens**

(57)     Die Erfindung betrifft ein Verfahren zur Bestimmung wenigstens einer Feuerungstemperatur für die Regelung einer Gasturbine (20), welche wenigstens einen Verdichter (12), wenigstens eine Brennkammer (13) und wenigstens eine Turbine (15) umfasst, wobei zur Kühlung der Turbine (15) am Verdichter (12) verdichtete Luft abgezapft und über wenigstens eine externe Kühlleitung (17) und ein in der Kühlleitung (17) angeordnetes Regelventil (V) der Turbine (15) zugeführt wird, bei welchem Verfahren eine Mehrzahl von Temperaturen und Drücken des Arbeitsmediums an verschiedenen Stellen der Gasturbine gemessen wird und aus den gemessenen Temperaturen und Drücken die wenigstens eine Feuerungstemperatur abgeleitet wird.

Eine flexiblere und genauere Regelung wird dadurch erreicht, dass zusätzlich der Kühlluft-Massenstrom durch die externe Kühlleitung (17) bestimmt und bei der Ableitung der wenigstens einen Feuerungstemperatur mitberücksichtigt wird.

Fig.3

**Beschreibung**

TECHNISCHES GEBIET

Die vorliegende Erfindung bezieht sich auf das Gebiet der Gasturbinentechnik. Sie betrifft ein Verfahren zur Bestimmung wenigstens einer Feuerungstemperatur für die Regelung einer Gasturbine gemäss dem Oberbegriff des Anspruchs 1. Sie betrifft weiterhin eine Gasturbine zur Durchführung des Verfahrens.

STAND DER TECHNIK

Die Feuerungstemperatur wird bei den heute üblichen Gasturbinen als Regelungsparameter unter bestimmten Betriebsbedingungen (Grundlast und Teillast) eingesetzt. Da kontinuierliche und genaue direkte Messungen der Feuerungstemperatur über die gesamte betriebliche Lebensdauer der Gasturbine aus Gründen der Zuverlässigkeit, der mechanischen Integrität und der Genauigkeit gegenwärtig nicht machbar sind, wird das Niveau der Feuerungstemperatur aus einer Vielzahl von gemessenen Prozessvariablen mittels eines Feuerungstemperatur-Bestimmungsverfahrens bestimmt, das in der Gasturbinen-Steuerungslogik einprogrammiert ist.

Ein solches Temperatur-Bestimmungsverfahren kann dazu ausgelegt sein, die Auslasstemperatur der Brennkammer, die Turbineneinlasstemperatur, die Turbinenauslasstemperatur oder eine beliebige andere mit der Verbrennung zusammenhängende Temperatur innerhalb der Gasturbine zu bestimmen, wie dies beispielsweise in den Druckschriften EP 1 231 369 A2 und EP 1 959 115 A2 bzw. US 2010/050591 A1 näher beschrieben ist.

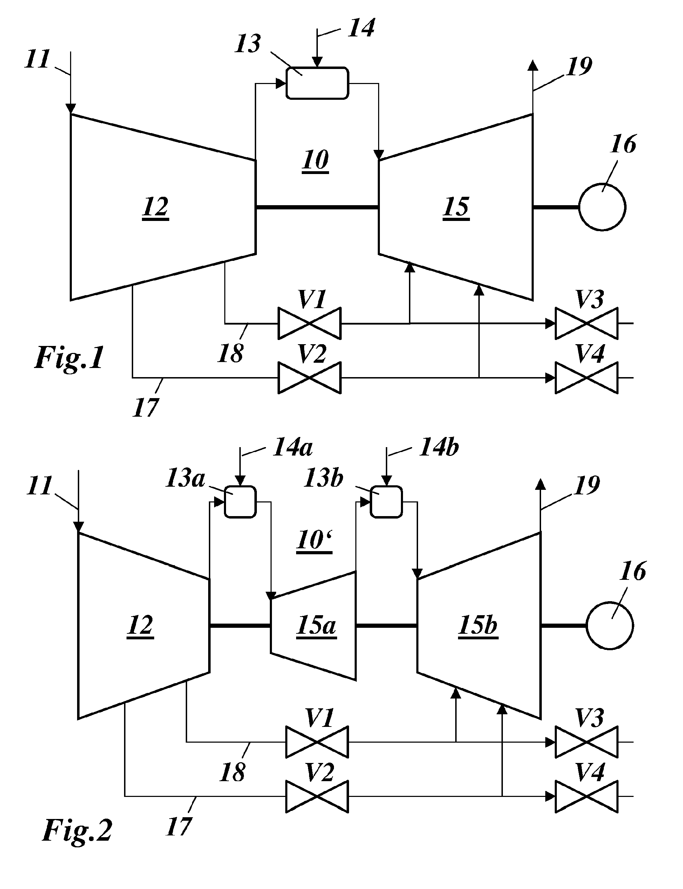

Fortschrittliche Gasturbinen-Betriebs-Konzepte befassen sich mit dem Einsatz einer angepassten Kühlmediums-Versorgung während des Gasturbinen-Betriebs, wie dies beispielsweise in den Druckschriften US 2004/0025491 A1 und US 2004/0221584 A1 offenbart ist. Eine solche Versorgung wird allgemein mit Kühlluft-Regelventilen verwirklicht. Zwei Varianten einer solchen Versorgung sind in Fig. 1 und Fig. 2 schematisch wiedergegeben. Die Gasturbine 10 der Fig. 1 umfasst einen Verdichter 12, eine Brennkammer 13 und eine Turbine 15, die den Verdichter 12 und einen Generator 16 antreibt. Der Verdichter 12 saugt im Betrieb Umgebungsluft 11 an, verdichtet diese und gibt sie an die Brennkammer 13 ab, in die über eine Brennstoffzuleitung 14 Brennstoff eingedüst und mittels der verdichteten Luft verbrannt wird. Das entstehende Heissgas wird in der Turbine 15 unter Abgabe einer Arbeitsleistung entspannt und nach Verlassen der Turbine 15 über einen Abgaskamin 19 nach aussen abgegeben. Zur Kühlung der Turbine 15 wird am Verdichter an verschiedenen Stellen auf unterschiedlichen Druckniveaus verdichtete Luft abgezapft und über Kühlleitungen 17 bzw. 18 zur Turbine 15 geleitet. Die Kühlluft-Massenströme können dabei über Regelventile V1 und V2 eingestellt werden. Über Abblasventile V3 und V4 kann Kühlluft nach aussen abgeblasen werden.

Die Gasturbine 10' der Fig. 2 ist als Gasturbine mit sequenzieller Verbrennung ausgebildet und umfasst daher zwei Brennkammern 13a und 13b mit zwei entsprechenden Brennstoffzuleitungen 14a und 14b und zwei zugeordneten Turbinen 15a und 15b. Im dargestellten Beispiel wird die zweite Turbine 15b über die Kühlleitungen 17 und 18 mit Kühlluft aus dem Verdichter 12 versorgt. Die Funktion der Ventile V1-V4 ist dieselbe wie in Fig. 1.

Eine Feuerungstemperatur-Regelung während des Betriebs mit einer eingestellten Kühlmediums-Versorgung unter Einsatz der herkömmlichen Feuerungstemperatur-Bestimmungsmethoden kann jedoch zu unerwünschten Abweichungen zwischen der gewünschten und tatsächlichen Feuerungstemperatur führen, und zwar wegen der sich ändernden Betriebslinie der Gasturbine.

DARSTELLUNG DER ERFINDUNG

Hier will die Erfindung Abhilfe schaffen. Es ist daher eine Aufgabe der Erfindung, ein Verfahren zur Bestimmung wenigstens einer Feuerungstemperatur für die Regelung einer Gasturbine anzugeben, welches den Einfluss einer einstellbaren Kühlung der Turbine adäquat berücksichtigt. Es ist weiterhin eine Aufgabe der Erfindung, eine Gasturbine zur Durchführung des Verfahrens zu schaffen.

Diese und andere Aufgaben werden durch die Gesamtheit der Merkmale der Ansprüche 1 und 6 gelöst.

Das erfindungsgemässe Verfahren geht aus von einer Gasturbine, welche wenigstens einen Verdichter, wenigstens eine Brennkammer und wenigstens eine Turbine umfasst, wobei zur Kühlung der Turbine am Verdichter verdichtete Luft abgezapft und über wenigstens eine externe Kühlleitung und ein in der Kühlleitung angeordnetes Regelventil der Turbine zugeführt wird. Bei diesen Verfahren wird eine Mehrzahl von Temperaturen und Drücken des Arbeitsmediums an verschiedenen Stellen der Gasturbine gemessen und aus den gemessenen Temperaturen und Drücken die wenigstens eine Feuerungstemperatur abgeleitet. Das erfindungsgemässe Verfahren ist dadurch gekennzeichnet, dass zusätzlich der Kühlluft-Massenstrom durch die externe Kühlleitung bestimmt und bei der Ableitung der Feuerungstemperatur mitberücksichtigt wird.

Gemäss einer Ausgestaltung des erfindungsgemässen Verfahrens werden zur Bestimmung des Kühlluft-Massenstroms die Stellung des Regelventils und die Drücke vor und hinter dem Regelventil gemessen.

Insbesondere weist das Regelventil eine Ventilcharakteristik auf, wobei die Ventilcharakteristik zur Bestimmung des Kühlluft-Massenstroms herangezogen wird.

Eine andere Ausgestaltung des erfindungsgemässen Verfahrens zeichnet sich dadurch aus, dass zusätzlich an verschiedenen Stellen der Gasturbine der Wasser/Dampf-Gehalt des Arbeitsmediums bestimmt und bei der Ableitung der Feuerungstemperatur mitberücksichtigt wird.

Eine Weiterbildung dieser Ausgestaltung ist dadurch gekennzeichnet, dass die Feuerungstemperatur nach Massgabe der Gleichung

$$T_x = f_1\left(T_7, \frac{p_6}{p_7}, x_d, \frac{p_{10}}{p_{11}}, \theta_1\right)$$

bestimmt wird, wobei
$f_1$ eine Funktion von Termen erster und höherer Ordnung der aufgeführten Variablen ist,
$T_7$ die Temperatur des Arbeitsmediums am Turbinenauslass bezeichnet,
$p_6/p_7$ der Quotient aus Turbineneinlassdruck und Turbinenauslassdruck ist,
$x_d$ den Wasser/ Dampf- Gehalt im Arbeitsmedium bezeichnet,
$p_{10}/p_{11}$ der Quotient der Drücke vor und nach dem Regelventil in der Kühlleitung ist, und
$\theta_1$ die Stellung des Regelventils charakterisiert.

Die erfindungsgemässe Gasturbine zur Durchführung des Verfahrens nach der Erfindung umfasst wenigstens einen Verdichter, wenigstens eine Brennkammer und wenigstens eine Turbine, wobei zur Kühlung der Turbine am Verdichter verdichtete Luft abgezapft und über wenigstens eine externe Kühlleitung und ein in der Kühlleitung angeordnetes Regelventil der Turbine zugeführt wird, wobei an verschiedenen Stellen der Gasturbine eine Mehrzahl von Messstellen Temperaturen und Drücke des Arbeitsmediums vorgesehen und über zugeordnete Signalleitungen mit einer Steuerung verbunden sind, welche Steuerbefehle zur Steuerung der Brennstoffzufuhr an eine Brennstoffzuleitung zur Brennkammer abgibt. Sie zeichnet sich dadurch aus, dass Mittel zur Bestimmung des Kühlluft-Massenstroms durch die externe Kühlleitung vorgesehen sind.

Eine Ausgestaltung der Gasturbine nach der Erfindung ist dadurch gekennzeichnet, dass am Regelventil Messstellen zur Messung der Drücke vor und nach dem Regelventil und zur Messung der Stellung des Regelventils vorgesehen und über Signalleitungen mit der Steuerung verbunden sind.

Insbesondere ist die Steuerung Teil eines geschlossenen Regelkreises zur Regelung einer Feuerungstemperatur der Gasturbine.

KURZE ERLÄUTERUNG DER FIGUREN

Die Erfindung soll nachfolgend anhand von Ausführungsbeispielen im Zusammenhang mit der Zeichnung näher erläutert werden. Es zeigen:

Fig. 1 in einem vereinfachten Schema eine Gasturbine mit einer Brennkammer und einer Turbine, wobei die Turbine über externe Kühlleitungen mit komprimierter Luft aus dem Verdichter gekühlt wird;

Fig. 2 in einer zu Fig. 1 vergleichbaren Darstellung eine Gasturbine mit sequenzieller Verbrennung und externer Kühlung der zweiten Turbine; und

Fig. 3 eine zu Fig. 1 vergleichbare Gasturbine mit externer Kühlung der Turbine und Regelung einer Feuerungstemperatur unter Einbeziehung des Kühlluft-Massenflusses gemäss einem Ausführungsbeispiel der Erfindung.

WEGE ZUR AUSFÜHRUNG DER ERFINDUNG

Die vorliegende Erfindung befasst sich mit der Verwendung von Regelventil-Positionsmessungen, Druckmessungen vor und hinter den Regelventilen, Massenstrom-Messungen des Kühlmediums und/oder Ventilcharakteristiken als Eingangsgrössen für die Bestimmung von Feuerungstemperaturen. Unter Berücksichtigung der Vorteile von Feuerungstemperatur-Bestimmungen, wie sie in den Druckschriften EP 1 231 369 A2 und EP 1 959 115 A2 bzw. US 2010/050591 A1 offenbart sind, werden zusätzlich zu den dort eingesetzten Messgrössen weitere Messungen berücksichtigt, insbesondere die Stellung der Regelventile (in den Kühlleitungen), die Druckverhältnisse an den Regelventilen und/oder die entsprechenden Ventilcharakteristiken.

Während der Einfluss eines sich mit den Betriebsbedingungen (umgebungsbedingt und/oder lastbedingt) ändernden Kühlluft-Massenstroms bereits ausführlich untersucht und für eine feststehende Kühlluftversorgung hinreichend gut bekannt ist (siehe die erwähnten EP 1 231 369 A2 und EP 1 959 115 A2 bzw. US 2010/050591 A1), wurden die Stellung der zugehörigen Regelventile, die Drücke vor und hinter den Regelventilen und die Ventilcharakteristiken der Regelventile bisher innerhalb der geschlossenen Regelschleife nicht als Eingangsgrössen zur Bestimmung der Feuerungstemperatur eingesetzt.

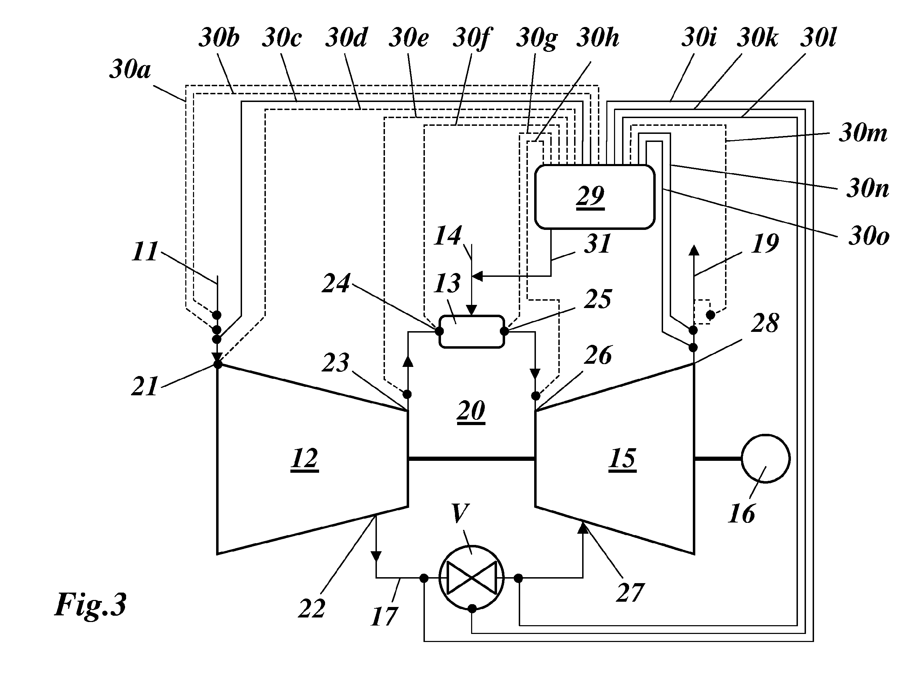

Gemäss dem in Fig. 3 dargestellten Ausführungsbeispiel bezieht sich die Erfindung auf eine Gasturbine 20 mit wenigstens einem Verdichter 12, wenigstens einer Brennkammer 13 und wenigstens einer Turbine 15. Die Turbine 15 ist über wenigstens eine externe Kühlleitung 17 mit dem Verdichter 12 verbunden. Zur Steuerung des Kühlluft-Massenstroms ist wenigstens ein Regelventil V in dieser Kühlleitung 17 angeordnet.

Weiterhin ist wenigstens eine Steuerung 29 vorgesehen, mit der in einer geschlossenen Regelschleife eine oder mehrere Feuerungstemperaturen mit dem erfindungsgemässen Verfahren geregelt werden, und der als Eingangssignale über entsprechende Signalleitungen 30a-o Messgrössen zugeführt werden, die in der Steuerung 29 verarbeitet werden und zu Steuerbefehlen 31 führen, mit denen (z.B. an der Brennstoffzuleitung 14) die Feuerungstemperaturen eingestellt werden. Die Steuerung 29 enthält einen Steuerungsrechner, der die Vielzahl der Messwerte für die Temperaturen und Drücke des Arbeitsmediums an verschiedenen Stellen der Gasturbine 20 verarbeitet.

Die folgenden Schritte führen zu den gewünschten Feuerungstemperaturen:

● Es wird eine Vielzahl von Temperaturen des Arbeitsmediums an verschiedenen Stellen in der Gasturbine gemessen.

● Es wird eine Vielzahl von Drücken des Arbeitsmediums an verschiedenen Stellen in der Gasturbine gemessen.

● Es wird der Wassergehalt des Arbeitsmediums an verschiedenen Stellen in der Gasturbine bestimmt, wie dies in den Druckschriften EP 1 959 115 A2 bzw. US 2010/050591 A1 beschrieben ist. Dabei ist hier festzuhalten, dass die gemessene Feuchte nicht unmittelbar als Korrekturgrösse in die Bestimmung der Feuerungstemperatur eingeht, sondern lediglich als "Kalibriergrösse" für die Anpassung des Referenzdruckes am Turbineneintritt infolge alterungsbedingter Effekte eingesetzt wird. Die Veränderung des Turbineneintrittsdruckes in Funktion aller eingespritzten Wassermengen - sowohl Ansaugluftkühlung (Inlet Cooling) als auch in die Brennkammer - wird als eigentlicher Korrekturterm für die Bestimmung der Feuerungstemperatur verwendet. Davon ausgehend, wird erfindungsgemäss eine Punktualisierung vorgenommen, wonach die Veränderung des Turbineneintrittsdruckes in Funktion des Feuchtegehalts relativ zu einem Referenzwert des Turbineneintrittsdruckes die eigentliche Korrekturgrösse ist. Gleichzeitig wird die Feuchteinformation nunmehr für die "Kalibrierung" der alterungsbedingten Veränderung des Referenzwertes verwendet.

● Es werden die Stellung des Regelventils V in der Kühlleitung 17 (der Regelventile) sowie die Drücke vor und hinter dem Regelventil (den Regelventilen) gemessen.

● Es wird die Ventilcharakteristik des bzw. der Regelventil(e) bereitgestellt (reduzierter Massenstrom $m_{red}$ oder Druckverlust Koeffizient $\zeta$ in Abhängigkeit von Winkelposition und Druckreduzierung).

Gemäss der Erfindung werden die Messungen der Regelventil-Position, der Drücke vor und hinter den Regelventilen, oder Messungen des Kühlluft-Massenstroms und/oder Ventilcharakteristiken verwendet, um die Feuerungstemperaturen abzuleiten. Eine oder mehrere Feuerungstemperaturen in der Gasturbine können automatisch durch die Rechnersteuerung als Funktion des Betriebspunktes in der Ventilcharakteristik oder, mit anderen Worten, als Funktion des Kühlluft-Massenstroms gesetzt werden. Der Einfluss einer Änderung des Kühlluft-Massenstroms als Folge einer aktiven Regelventil-Regelung wird durch eine mathematische Korrelation im Algorithmus der Regelschleife für die Feuerungstemperaturen berücksichtigt.

Durch die Einbeziehung der Änderungen des Kühlluft-Massenstroms in die Regelung der Feuerungstemperaturen ist es möglich, eine verbesserte Regelungsgenauigkeit für die Feuerungstemperaturen zu erreichen, und zwar über einen breiten Bereich von umweltbedingten und lastbedingten Betriebs-Bedingungen.

Die nachfolgende Struktur der geschlossenen Regelschleife ist für die Regelung der Feuerungstemperaturen definiert. $T_x$ bezeichnet dabei eine oder mehrere Feuerungstemperaturen, die der geschlossenen Regelung in der Gasturbine unterliegen:

Die Feuerungstemperatur $T_x$ wird nach Massgabe der Gleichung

$$T_x = f_1\left(T_7, \frac{p_6}{p_7}, x_d, \frac{p_{10}}{p_{11}}, \theta_1\right)$$

bestimmt, wobei
$f_1$ eine Funktion von Termen erster und höherer Ordnung der aufgeführten Variablen ist,
$T_7$ die Temperatur des Arbeitsmediums am Turbinenauslass bezeichnet,
$p_6/p_7$ der Quotient aus Turbineneinlassdruck und Turbinenauslassdruck ist,
$x_d$ den Wasser/ Dampf- Gehalt im Arbeitsmedium bezeichnet,
$p_{10}/p_{11}$ der Quotient der Drücke vor und nach dem Regelventil (V) in der Kühlleitung (17) ist, und
$\theta_1$ die Stellung des Regelventils (V) charakterisiert.

Für den Quotienten $p_6/p_7$ gilt dabei:

$$\frac{T_6}{T_7} = \left(\frac{p_6}{p_7}\right)^{\frac{n-1}{n}} = \left(\frac{p_6}{p_7}\right)^{\eta_p \frac{\kappa-1}{\kappa}}$$

mit der Turbineneinlasstemperatur $T_6$ und der Turbinenauslasstemperatur $T_7$ und dem polytropen Turbinenwirkungsgrad $\eta_p$.

Die Einbeziehung von $p_{10}/p_{11}$ und $\theta_1$ korrespondiert zur Notwendigkeit, den angepassten Kühlmediums-Massenstrom im polytropen Turbinenwirkungsgrad $\eta_p$ zu berücksichtigen. Der Effekt kann berücksichtigt werden durch den Betriebspunkt des Kühlluft-Regel-

ventils V (Stellung $\theta_1$ und Druckverhältnis $p_{10}/p_{11}$), um die Änderungen im Kühlluft-Massenstrom $m_{10}$ in der Kühlluftleitung im Verhältnis zu einer Referenzposition des Regelventils in einem bekannten Kühlsystem zu erhalten.

Der Einfluss von $m_{10}$ in den Grössen $p_6/p_7$ und $T_7$ ist wie folgt ($m_2$ bezeichnet den Massenstrom der angesaugten Umgebungsluft 11):

$$\frac{p_6}{p_7} = f_2\left(m_{10}/m_2\right),$$

sowie

$$T_7 = f_3\left(m_{10}/m_2\right),$$

und

$$\frac{p_6}{p_7} = g_2\left(\frac{p_6}{p_{7\ ref}}, \frac{p_{10}}{p_{11}}, \theta_1\right),$$

sowie

$$T_7 = g_3\left(T_{ref}, \frac{p_{10}}{p_{11}}, \theta_1\right),$$

wobei $f_2$, $f_3$, $g_2$ und $g_3$ funktionsmässig durch Terme erster und höherer Ordnung repräsentiert werden.

Gemäss Fig. 3 werden zur Regelung der Feuerungstemperaturen die folgenden Messgrössen über zugeordnete Signalleitungen 30a-o an die Steuerung 29 übermittelt:

1. Signalleitung 30a: Umgebungstemperatur $T_1$;
2. Signalleitung 30b: Umgebungsdruck $p_1$;
3. Signalleitung 30c: Verdichtereinlasstemperatur $T_2$;
4. Signalleitung 30d: Stellung der verstellbaren Einlassleitschaufeln $\varphi_1$;
5. Signalleitung 30e: Verdichterauslassdruck $p_3$;
6. Signalleitung 30f: Brennkammereinlassdruck $p_4$;
7. Signalleitung 30g: Brennkammerauslassdruck $p_5$;
8. Signalleitung 30h: Turbineneinlassdruck $p_6$;
9. Signalleitung 30i: Druck vor dem Regelventil V, $p_{10}$;
10. Signalleitung 30k: Stellung des Regelventils V, $\theta_1$;

11. Signalleitung 30l: Druck nach dem Regelventil V, $p_{11}$;
12. Signalleitung 30m: Umgebungsdruck $p_1$;
13. Signalleitung 30n: Turbinenauslasstemperatur $T_7$; und
14. Signalleitung 30o: Turbinenauslassdruck $p_7$.

Der Turbinenauslassdruck $p_7$ kann dabei auch durch den Umgebungsdruck $p_1$ und den Druckverlust vom Turbinenauslass zum Abgaskamin 19 ersetzt werden.

BEZUGSZEICHENLISTE

| | |
|---|---|
| 10, 10' | Gasturbine |
| 11 | Umgebungsluft |
| 12 | Verdichter |
| 13, 13a, b | Brennkammer |
| 14, 14a, b | Brennstoffzuleitung |
| 15, 15a, b | Turbine |
| 16 | Generator |
| 17, 18 | Kühlleitung |
| 19 | Abgaskamin |
| 20 | Gasturbine |
| 21 | Verdichtereinlass |
| 22 | Anzapfstelle (Verdichter) |
| 23 | Verdichterauslass |
| 24 | Brennkammereinlass |
| 25 | Brennkammerauslass |
| 26 | Turbineneinlass |
| 27 | Kühleinlass (Turbine) |
| 28 | Turbinenauslass |
| 29 | Steuerung |
| 30a- o | Signalleitung |
| 31 | Steuerbefehl |

V, V1, 2      Regelventil

V3, 4      Abblasventil


**Patentansprüche**

1.  Verfahren zur Bestimmung wenigstens einer Feuerungstemperatur ($T_x$) für die Regelung einer Gasturbine (20), welche wenigstens einen Verdichter (12), wenigstens eine Brennkammer (13) und wenigstens eine Turbine (15) umfasst, wobei zur Kühlung der Turbine (15) am Verdichter (12) verdichtete Luft abgezapft und über wenigstens eine externe Kühlleitung (17) und ein in der Kühlleitung (17) angeordnetes Regelventil (V) der Turbine (15) zugeführt wird, bei welchem Verfahren eine Mehrzahl von Temperaturen und Drücken des Arbeitsmediums an verschiedenen Stellen der Gasturbine gemessen und aus den gemessenen Temperaturen und Drücken die wenigstens eine Feuerungstemperatur ($T_x$) abgeleitet wird, **dadurch gekennzeichnet, dass** zusätzlich der Kühlluft-Massenstrom durch die externe Kühlleitung (17) bestimmt und bei der Ableitung der Feuerungstemperatur ($T_x$) mitberücksichtigt wird.

2.  Verfahren nach Anspruch 1, **dadurch gekennzeichnet, dass** die Feuerungstemperatur ($T_x$) eine Korrekturgrösse aufweist, welche durch die Veränderung des Turbineneintrittsdruckes in Funktion des Feuchtegehalts relativ zu einem Referenzwert des Turbineneintrittsdruckes bestimmt wird.

3.  Verfahren nach Anspruch 2, **dadurch gekennzeichnet, dass** der Feuchtegehalt für die Kalibrierung der alterungsbedingten Veränderung des Referenzwertes verwendet wird.

4.  Verfahren nach einem der Ansprüche 1-3, **dadurch gekennzeichnet, dass** zur Bestimmung des Kühlluft-Massenstroms die Stellung des Regelventils (V) und die Drücke vor und hinter dem Regelventil (V) gemessen werden.

5.  Verfahren nach Anspruch 4, **dadurch gekennzeichnet, dass** das Regelventil (V) eine Ventilcharakteristik aufweist, und dass die Ventilcharakteristik zur Bestimmung des Kühlluft-Massenstroms herangezogen wird.

6.  Verfahren nach einem der Ansprüche 1-5, **dadurch gekennzeichnet, dass** die Feuerungstemperatur ($T_x$) nach Massgabe der Gleichung

$$T_x = f_1\left(T_7, \frac{p_6}{p_7}, x_d, \frac{p_{10}}{p_{11}}, \theta_1\right)$$

bestimmt wird, wobei $f_1$ eine Funktion von Termen erster und höherer Ordnung der aufgeführten Variablen ist, $T_7$ die Temperatur des Arbeitsmediums am Turbinenauslass bezeichnet, $p_6/p_7$ der Quotient aus Turbineneinlassdruck und Turbinenauslassdruck ist, $x_d$ den Wasser/Dampf-Gehalt im Arbeitsmedium bezeichnet, $p_{10}/p_{11}$ der Quotient der Drücke vor und nach dem Regelventil (V) in der Kühlleitung (17) ist, und $\theta_1$ die Stellung des Regelventils (V) charakterisiert.

7.  Gasturbine (20) zur Durchführung des Verfahrens nach einem der Ansprüche 1-6, welche wenigstens einen Verdichter (12), wenigstens eine Brennkammer (13) und wenigstens eine Turbine (15) umfasst, wobei zur Kühlung der Turbine (15) am Verdichter (12) verdichtete Luft abgezapft und über wenigstens eine externe Kühlleitung (17) und ein in der Kühlleitung (17) angeordnetes Regelventil (V) der Turbine (15) zugeführt wird, wobei an verschiedenen Stellen der Gasturbine (20) eine Mehrzahl von Messstellen Temperaturen und Drücke des Arbeitsmediums vorgesehen und über zugeordnete Signalleitungen (30a-h; 30m-o) mit einer Steuerung (29) verbunden sind, welche Steuerbefehle (31) zur Steuerung der Brennstoffzufuhr an eine Brennstoffzuleitung (14) zur Brennkammer (13) abgibt, **dadurch gekennzeichnet, dass** Mittel zur Bestimmung des Kühlluft-Massenstroms durch die externe Kühlleitung (17) vorgesehen sind.

8.  Gasturbine nach Anspruch 7, **dadurch gekennzeichnet, dass** am Regelventil (V) Messstellen zur Messung der Drücke ($p_{10}$, $p_{11}$) vor und nach dem Regelventil (V) und zur Messung der Stellung des Regelventils (V) vorgesehen und über Signalleitungen (30i-l) mit der Steuerung (29) verbunden sind.

9.  Gasturbine nach Anspruch 7 oder 8, **dadurch gekennzeichnet, dass** die Steuerung (29) Teil eines geschlossenen Regelkreises zur Regelung einer Feuerungstemperatur ($T_x$) der Gasturbine (20) ist.

Fig.1

Fig.2

Fig.3

Europäisches
Patentamt

European
Patent Office

Office européen
des brevets

**EUROPÄISCHER RECHERCHENBERICHT**

Nummer der Anmeldung

EP 12 16 1134

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2005/066664 A1 (SHIBATA TAKANORI [JP] ET AL) 31. März 2005 (2005-03-31) * Absatz [0017] - Absatz [0020]; Abbildung 1 * * Absatz [0024] * * Absatz [0035] - Absatz [0036] * | 7-9 | INV. F02C7/18 F02C9/00 F02C9/28 |
| A | EP 2 224 114 A2 (GEN ELECTRIC [US]) 1. September 2010 (2010-09-01) * Absatz [0001] - Absatz [0007]; Abbildung 1 * * Absatz [0009] - Absatz [0029] * | 1-9 | |
| A | EP 1 840 354 A1 (ALSTOM TECHNOLOGY LTD [CH]) 3. Oktober 2007 (2007-10-03) * Absatz [0001] - Absatz [0019] * * Absatz [0021] - Absatz [0030]; Abbildung 3 * | 1-9 | |
| A | EP 1 474 595 A1 (ALSTOM TECHNOLOGY LTD [CH]) 10. November 2004 (2004-11-10) * Absatz [0001] - Absatz [0022] * * Absatz [0024] - Absatz [0027] * * Absatz [0016] * | 1-9 | RECHERCHIERTE SACHGEBIETE (IPC) F02C F23N |
| A,D | EP 1 959 115 A2 (ALSTOM TECHNOLOGY LTD [CH]) 20. August 2008 (2008-08-20) * das ganze Dokument * | 1-9 | |
| A,D | EP 1 231 369 A2 (GEN ELECTRIC [US]) 14. August 2002 (2002-08-14) * das ganze Dokument * | 1-9 | |

Der vorliegende Recherchenbericht wurde für alle Patentansprüche erstellt

| Recherchenort | Abschlußdatum der Recherche | Prüfer |
|---|---|---|
| Den Haag | 14. September 2012 | Herdemann, Claire |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 12 16 1134

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-09-2012

| Im Recherchenbericht angeführtes Patentdokument | Datum der Veröffentlichung | Mitglied(er) der Patentfamilie | | Datum der Veröffentlichung |
|---|---|---|---|---|
| US 2005066664 A1 | 31-03-2005 | JP | 4100316 B2 | 11-06-2008 |
| | | JP | 2005105908 A | 21-04-2005 |
| | | US | 2005066664 A1 | 31-03-2005 |
| EP 2224114 A2 | 01-09-2010 | CN | 101818691 A | 01-09-2010 |
| | | EP | 2224114 A2 | 01-09-2010 |
| | | JP | 2010196703 A | 09-09-2010 |
| | | US | 2010215480 A1 | 26-08-2010 |
| EP 1840354 A1 | 03-10-2007 | EP | 1840354 A1 | 03-10-2007 |
| | | US | 2007227155 A1 | 04-10-2007 |
| EP 1474595 A1 | 10-11-2004 | AU | 2002347121 A1 | 24-07-2003 |
| | | EP | 1474595 A1 | 10-11-2004 |
| | | US | 2005109033 A1 | 26-05-2005 |
| | | WO | 03058047 A1 | 17-07-2003 |
| EP 1959115 A2 | 20-08-2008 | DE | 102007008296 A1 | 21-08-2008 |
| | | EP | 1959115 A2 | 20-08-2008 |
| | | US | 2010050591 A1 | 04-03-2010 |
| EP 1231369 A2 | 14-08-2002 | EP | 1231369 A2 | 14-08-2002 |
| | | JP | 4356862 B2 | 04-11-2009 |
| | | JP | 2002357320 A | 13-12-2002 |
| | | KR | 20020065859 A | 14-08-2002 |
| | | US | 2002106001 A1 | 08-08-2002 |
| | | US | 2004076218 A1 | 22-04-2004 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1231369 A2
- EP 1959115 A2
- US 2010050591 A1
- US 20040025491 A1
- US 20040221584 A1